# EUROPEAN PATENT APPLICATION

(11) **EP 4 668 439 A1**
(43) Date of publication of application: **24.12.2025**
(21) Application number: 25754600.2
(22) Date of filing: 10.02.2025
(51) Int. Cl.: H01M 50/242, H01M 50/264, H01M 10/6568, H01M 50/502, H01M 50/593, H01M 50/517, H01M 10/613, H01M 10/6551

(54) **BATTERY ASSEMBLY AND BATTERY PACK INCLUDING SAME**

(30) Priority: 15.02.2024 KR 20240021641; 06.02.2025 KR 20250015066
(71) Applicant: LG Energy Solution, Ltd., Seoul 07335 (KR)
(72) Inventor: LEE, Jung Hoon, Daejeon 34122 (KR); UM, Taeki, Daejeon 34122 (KR)
(74) Representative: Plasseraud IP
(86) International application number: PCT/KR2025/001940
(87) International publication number: WO 2025/174013

(57) **Abstract**

A battery assembly according to certain aspects of the present disclosure comprises: a battery cell stack in which a plurality of battery cells are stacked; a fixed frame that covers at least a part of the battery cell stack; an outer frame in which the battery cell stack and the fixed frame are housed; and an inlet and an outlet that circulates a coolant into the outer frame.

## Description

### [TECHNICAL FIELD]

### Cross-Reference to Related Application(s)

This application claims priority to and the benefit of Korean Patent Application no. KR10-2024-0021641, filed on February 15, 2024, and Korean Patent Application no. KR10-2025-0015066, filed on February 6, 2025, the entire contents of which are incorporated herein by reference.

The present disclosure relates to a battery assembly and a battery pack including the same, and more particularly, to a battery assembly improved in cooling efficiency, enhanced in fixing force of a battery cell and thus improved in vibration and impact performance of the battery assembly, and a battery pack including the same.

### [BACKGROUND ART]

As mobile devices have been increasingly developed, and the demand for such mobile devices has increased, the demand for secondary batteries as energy sources is also rapidly increasing. Accordingly, much research on secondary batteries satisfying various needs has been carried out.

A secondary battery has attracted considerable attention as an energy source for power-driven devices, such as an electric bicycle, an electric vehicle, and a hybrid electric vehicle, as well as an energy source for mobile devices, such as a mobile phone, a digital camera, and a laptop computer.

Recently, with a continuous rise of the necessity for a large-capacity secondary battery structure, including the utilization of the secondary battery as an energy storage source, there is a growing demand for a battery pack of a medium or large-sized module structure which is an assembly of battery modules in which a plurality of secondary batteries are connected in series/parallel.

Meanwhile, when a plurality of battery cells are connected in series/parallel to configure a battery pack, it is common to configure a battery assembly composed of at least one battery cell and then configure a battery pack by using at least one battery assembly and adding other components.

Since battery cells constituting such a medium or large-sized battery module are composed of secondary batteries which can be charged and discharged, such a high-output large-capacity secondary battery generates a large amount of heat in a charge and discharge process. In this case, heat generated from the large number of battery cells is added up in a narrow space, so that the temperature can rise more quickly and excessively. In other words, battery assemblies in which a large number of battery cells are stacked, and a battery pack mounted with such battery assemblies can obtain high output, but it is not easy to remove heat generated from the battery cells during charging and discharging. When the heat dissipation of the battery cells is not properly performed, deterioration of the battery cells is accelerated, the lifespan is shortened, and the possibility of explosion or ignition increases.

Moreover, in the case of a battery assembly included in a vehicle battery pack, it is frequently exposed to direct sunlight and may be placed under high-temperature conditions such as summer or desert areas. Further, since a plurality of battery assemblies are concentratedly disposed to increase the mileage of the vehicle, the flame or heat generated in one battery assembly can easily propagate to an adjacent battery assembly, which may eventually lead to ignition or explosion of the battery pack itself.

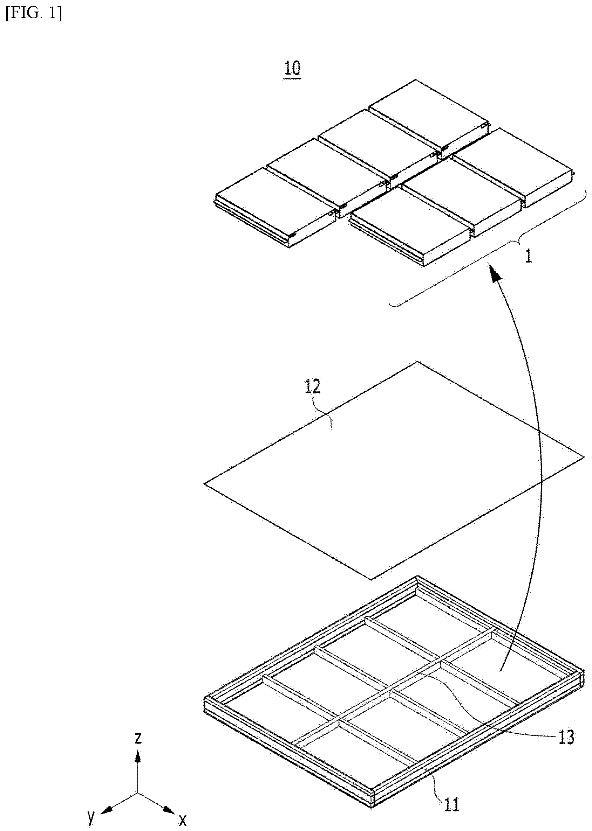

FIG. 1 is an exploded perspective view of a conventional battery pack.

Referring to FIG. 1, a conventional battery pack 10 includes a lower pack frame 11 on which a plurality of battery assemblies 1 are mounted, an upper pack frame 12 positioned in an upper part of the battery assemblies 1, and an internal beam 13 that partitions the position where the battery assemblies 1 are mounted within the battery pack 10.

In this way, when a battery assembly 1 is mounted within a battery pack 10, the energy density of the battery pack 10 decreases due to the internal beam 13 that partitions between the battery assemblies 1, which causes a problem that a larger number of battery packs 10 must be provided in order to satisfy the efficiency required for the device or the like. Furthermore, due to the weight of the battery pack 10, there is a limit to the number of battery packs 10 that can be provided in a device. Therefore, by reducing the weight of the battery pack 10 and at the same time increasing the energy density of the battery pack 10, a larger number of battery modules 1 must be mounted within the battery pack 10.

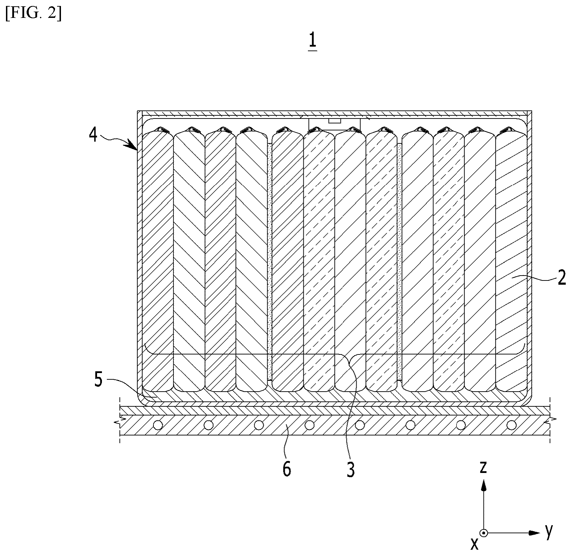

FIG. 2 is a cross-sectional view showing the battery assembly of FIG. 1.

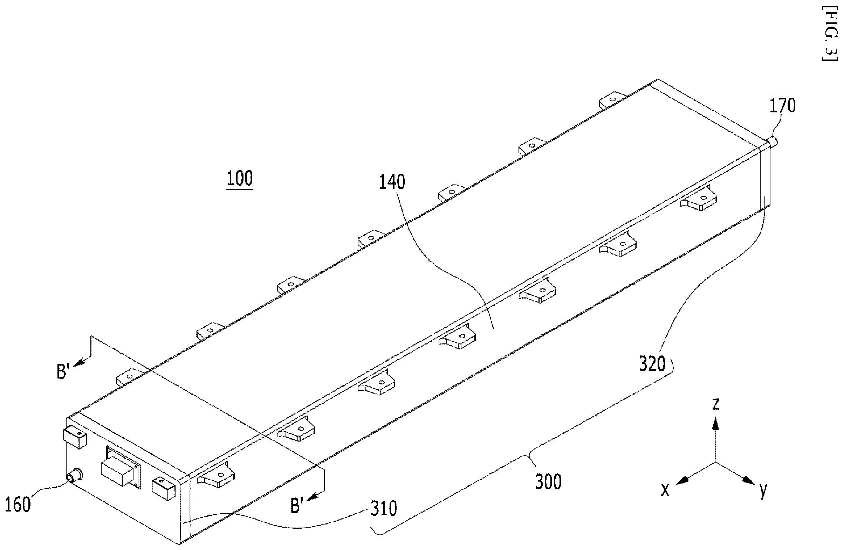

Referring to FIG. 2, a conventional battery assembly 1 includes a battery cell stack 3 including battery cells 2 stacked in a preset direction, and an outer frame 4 that houses the battery cell stack 3, wherein the battery cell stack 3 is fixedly positioned on a thermally conductive resin layer 5 positioned on the lower surface of the outer frame 4. In this case, a heat sink 6 that comes into contact with the bottom part of the outer frame 4 positioned in the -z-axis direction of FIG. 3 may be provided to cool the heat generated from the battery cell stack 3.

However, since the heat sink 6 does not receive transfer of heat while directly contacting the battery cell stack 3, there is a disadvantage in that the cooling efficiency is not very high. Thus, there is a need for a method to cool the battery assembly 1 more effectively.

### [DETAILED DESCRIPTION OF THE INVENTION]

### [Technical Problem]

Therefore, it is an object of the present disclosure to provide a battery assembly enhanced in fixing force of a battery cell and thus improved in vibration and impact performance of the battery assembly, and a battery pack including the same.

However, the technical objects to be solved by embodiments of the present disclosure are not limited to the above-described objects, and can be variously expanded within the scope of the technical idea included in the present disclosure.

### [Technical Solution]

According to a related aspect of the present disclosure, there is provided a battery assembly comprising: a battery cell stack in which a plurality of battery cells are stacked; a fixed frame that covers at least a part of the battery cell stack; an outer frame in which the battery cell stack and the fixed frame are housed; and an inlet and an outlet that circulates a coolant into the outer frame.

The battery cell stack may comprise a first battery cell stack and a second battery cell stack disposed along a longitudinal direction in which electrode leads protrude from the battery cells. The first battery cell stack and the second battery cell stack may be fixed to the fixed frame.

The fixed frame may comprise side surface parts that cover both side surfaces of the battery cell stack, and the both side surface parts of the fixed frame may come into surface contact with each of the battery cells positioned on the outermost sides of the battery cell stack.

The battery cell stack may include a first battery cell stack and a second battery cell stack. The battery assembly may comprise a first busbar frame assembly provided on one side of the first battery cell stack; and a second busbar frame assembly provided on one side of the second battery cell stack.

The battery assembly may further comprise an insulating plate that is fastened to at least one of the first busbar frame assembly or the second busbar frame assembly, between the first busbar frame assembly and the second busbar frame assembly.

The insulating plate may comprise a flow path hole through which the coolant can move. The coolant may move between the first battery cell stack and the second battery cell stack through the flow path hole.

The insulating plate and the busbar frame assemblies may be bolt-coupled.

The inlet and the outlet may be positioned on opposite sides to each other on the basis of the insulating plate.

The first battery cell stack may be positioned between the inlet and the insulating plate, and the second battery cell stack may be positioned between the outlet and the insulating plate.

The coolant flowing in through the inlet may pass through the first battery cell stack, the flow path hole included in the insulating plate, and the second battery cell stack in sequence, and be discharged through the outlet.

The battery assembly may further comprise a cooling spacer positioned at least one place between the plurality of battery cells. The cooling spacer may comprise a plurality of cooling holes formed along a longitudinal direction, and the coolant can move through the plurality of cooling holes.

The fixed frame may comprise a lower surface part that covers a lower surface of the battery cell stack. A first adhesive member may be positioned between the lower surface of the battery cell stack and the lower surface part of the fixed frame. The first adhesive member may be adhered to the lower surface part of the battery cell stack and the lower surface of the fixed frame, respectively.

The fixed frame may comprise side surface parts that cover both side surfaces of the battery cell stack. A second adhesive member may be positioned at at least one place between the side surface of the battery cell stack and the side surface part of the fixed frame. The second adhesive member may be adhered to the side surface of the battery cell stack and the side surface part of the fixed frame, respectively.

The battery assembly may further comprise a cooling fin positioned at least one place between the battery cells. The fixed frame may comprise a lower surface part that covers the lower surface of the battery cell stack, and the cooling fin may be fixed between the lower surface part of the fixed frame and a ceiling part of the outer frame.

The cooling fin may comprise: a main part positioned between the battery cells; a first support part that extends perpendicular to one surface of the main part at the upper end of the main part; and a second support part that extends perpendicular to one surface of the main part at the lower end of the main part.

The first support part may come into contact with the ceiling part of the outer frame, and the second support part may come into contact with the lower surface part of the fixed frame.

According to a further aspect of the present disclosure, there is provided a battery pack comprising the above-described battery assembly.

### [Advantageous Effects]

According to certain embodiments of the present disclosure, the energy density of the battery pack can be improved by electrically connecting the battery assemblies.

In addition, by more effectively cooling the upper and lower surfaces of the battery cells, the cooling efficiency can be improved to ensure the safety of the battery assembly and the battery pack.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is an exploded perspective view of a conventional battery pack.
FIG. 2 is a cross-sectional view showing the battery assembly of FIG. 1.
FIG. 3 is a perspective view showing a battery assembly according to certain embodiments of the present disclosure.
FIG. 4 is a perspective view showing a first battery cell stack, a first busbar frame assembly, and the like, which are components included in a battery assembly according to certain embodiments of the present disclosure.
FIG. 5 is an exploded perspective view showing a first battery cell stack, a first busbar frame assembly, and a flexible printed circuit board.
FIG. 6 is an exploded perspective view excluding the fixed frame and the outer frame of FIG. 3.
FIG. 7 is an exploded perspective view in which a fixed frame is added in FIG. 6.
FIG. 8 is a perspective view showing the lower side part of FIG. 7 at a different angle so as to make it visible.
FIG. 9 is a diagram showing a state in which the configuration of FIG. 7 is inserted into the outer frame.
FIG. 10 is a perspective view showing a state in which the coolant is positioned within the battery assembly.
FIG. 11 is a plan view showing a state in which the upper end of the outer frame is omitted in the battery assembly according to certain embodiments of the present disclosure, as viewed from above.
FIG. 12 is an exploded perspective view showing an insulating plate between battery cell stacks.
FIG. 13 is a perspective view showing an insulating plate according to certain embodiments of the present disclosure.
FIG. 14 is a plan view of a cooling spacer according to certain embodiments of the present disclosure.
FIG. 15 is a perspective view of a cooling spacer according to certain embodiments of the present disclosure.
FIG. 16 is a cross-sectional view showing a cross section taken along the cutting line B-B' of FIG. 3.
FIG. 17 is a perspective view showing a cooling fin according to certain embodiments of the present disclosure.
FIG. 18 is a cross-sectional view of a battery assembly according to certain other embodiments of the present disclosure.
FIG. 19 is an exploded perspective view of a battery pack according to certain embodiments of the present disclosure.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the **drawings** arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is disposed "on" a specific part, the description includes not only a case where the layer, film, region, plate or the like is disposed "directly on" the specific part, but also a case where the layer, film, region, plate or the like is disposed on the specific part via another part. When a part is disposed "directly on" another part, this indicates that no new component is present between the two parts. Further, when a component is disposed "on" a reference part, this indicates that the component is present at the top of or under the reference part, and does not necessarily indicate that the component is disposed only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

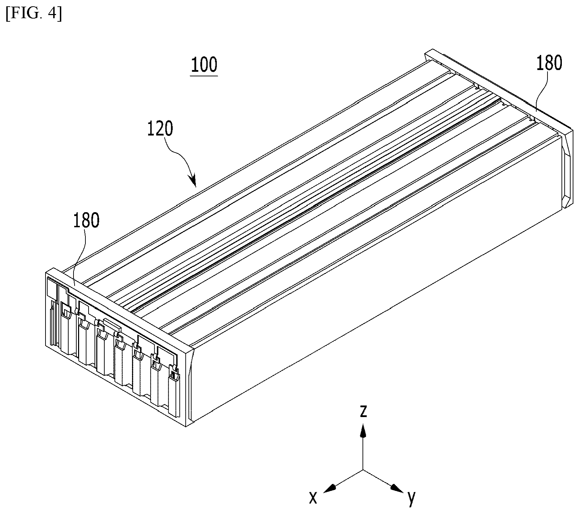

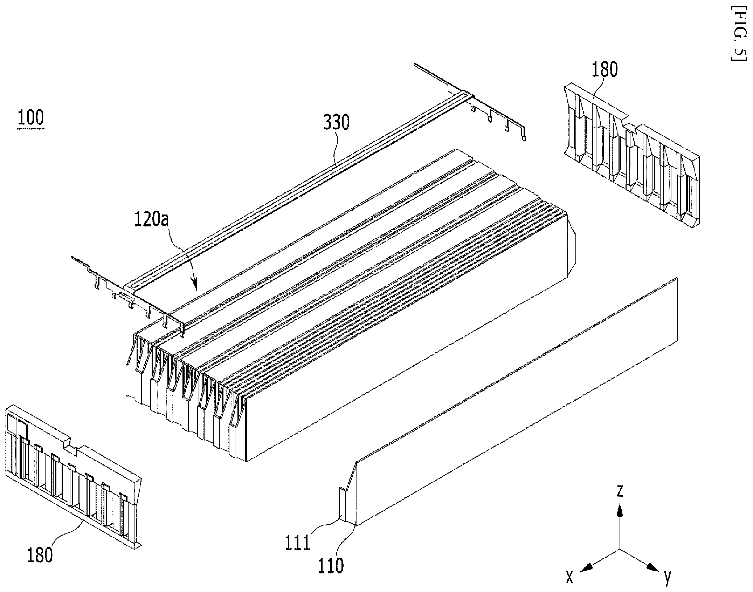

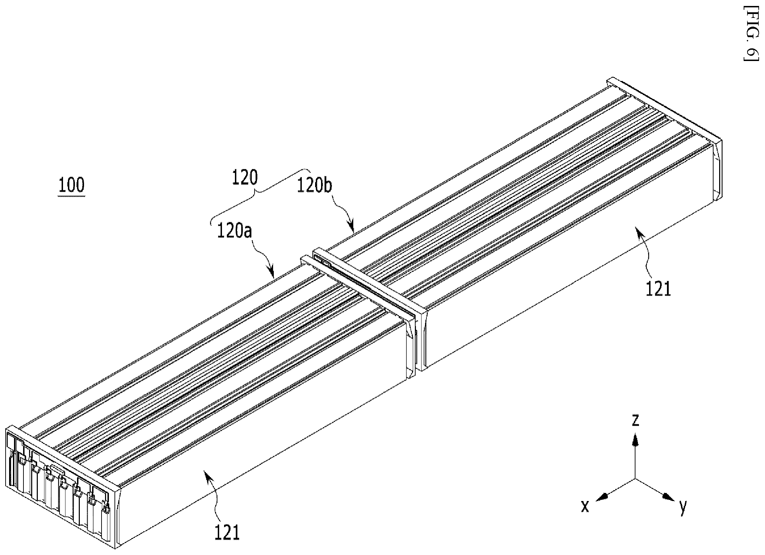

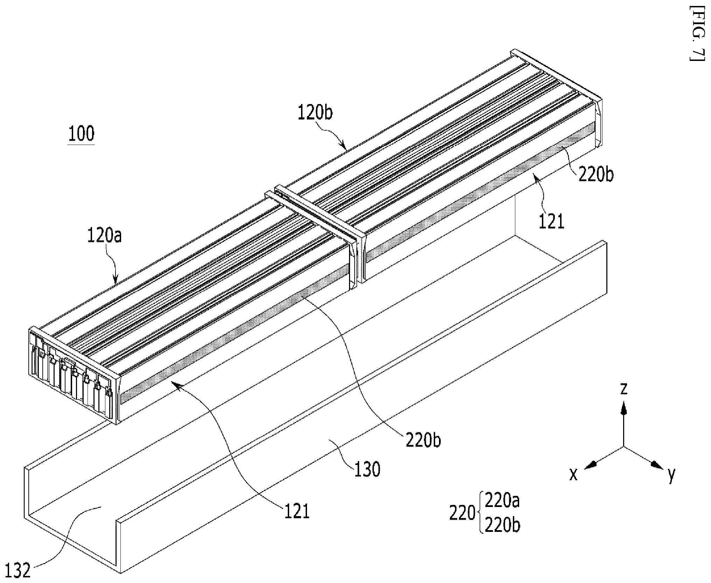

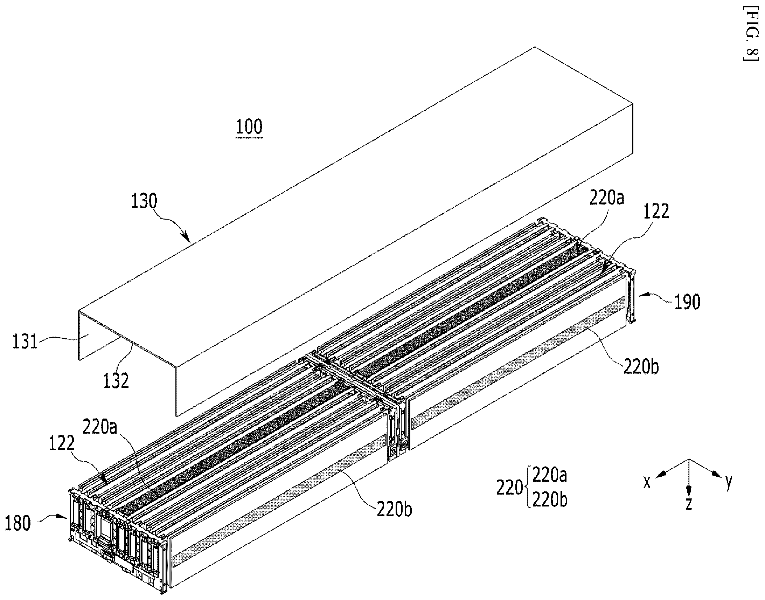

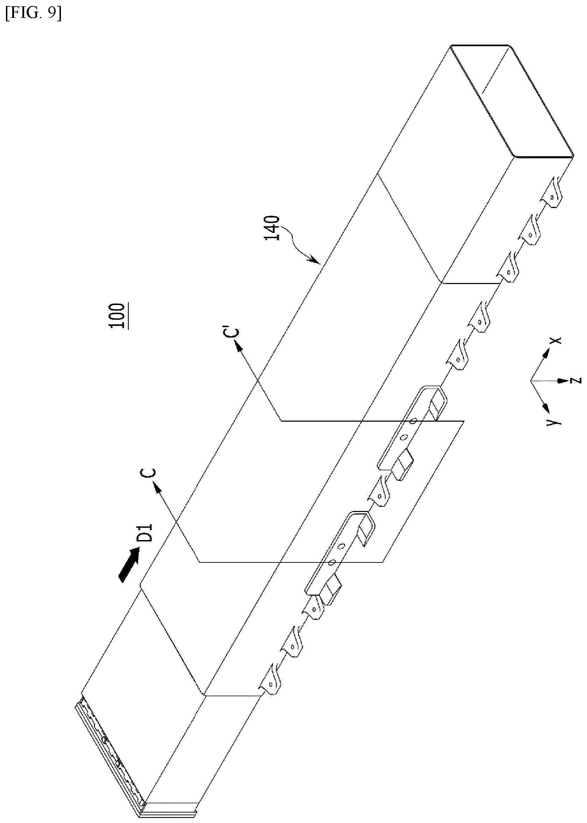

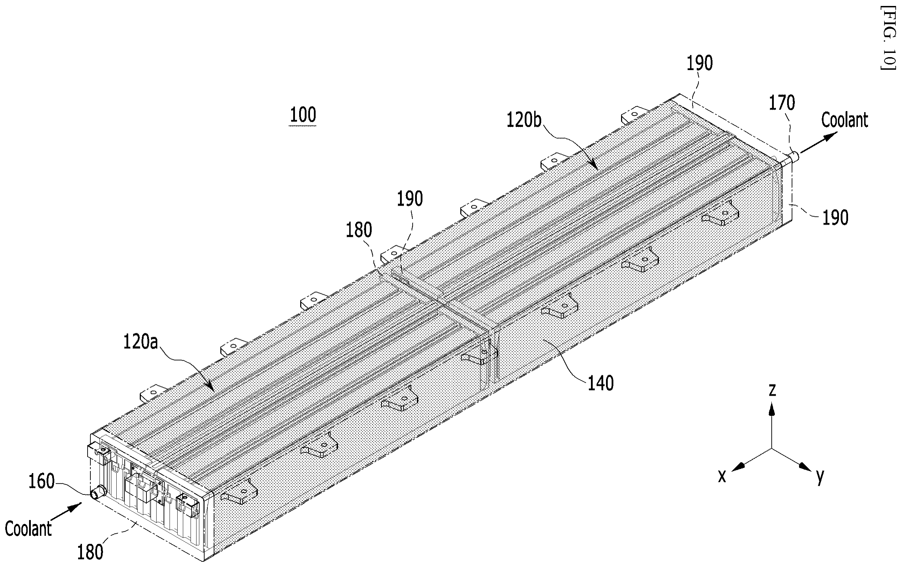

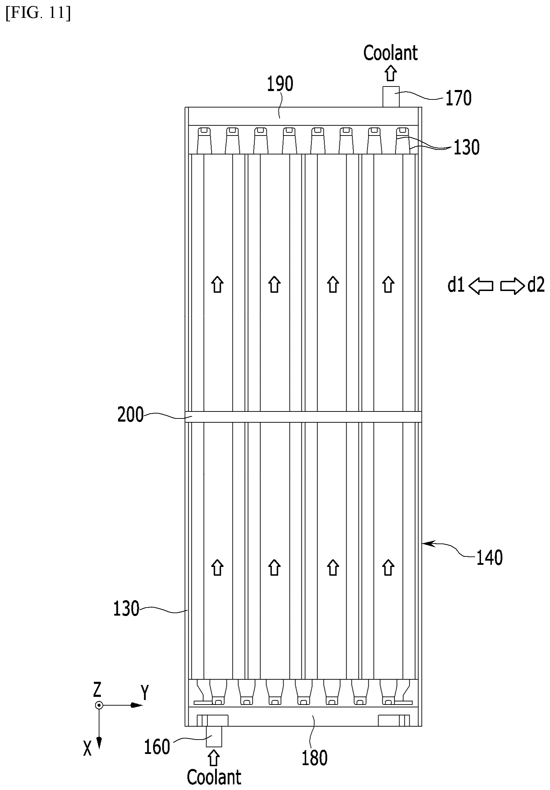

FIG. 3 is a perspective view showing a battery assembly 100 according to certain embodiments of the present disclosure. FIG. 4 is a perspective view showing a first battery cell stack 120a, a first busbar frame assembly 180, and a flexible printed circuit board 330, which are components included in a battery assembly 100 according to certain embodiments of the present disclosure. FIG. 5 is an exploded perspective view showing a first battery cell stack 120a, a first busbar frame assembly 180, and a flexible printed circuit board 330. FIG. 6 is an exploded perspective view excluding the outer frame 140 of FIG. 3 and the fixed frame 130 of FIG. 8. FIG. 7 is an exploded perspective view in which a fixed frame is added in FIG. 6. FIG. 8 is a perspective view showing the lower side part of FIG. 7 at a different angle so as to make it visible. FIG. 9 is a diagram showing a state in which the configuration of FIG. 7 is inserted into the outer frame 140. FIG. 10 is a perspective view showing a state in which the coolant is positioned within the battery assembly 100. FIG. 11 is a plan view showing a state in which the upper end of the outer frame 140 is omitted in the battery assembly 100 according to certain embodiments of the present disclosure, as viewed from above.

Referring to FIGS. 3 to 11, a battery assembly 100 according to certain embodiments of the present disclosure includes a battery cell stack 120 in which a plurality of battery cells 110 are stacked; a fixed frame 130 that covers at least a part of the battery cell stack 120; an outer frame 140 in which the battery cell stack 120 and the fixed frame 130 are housed; and an inlet 160 and an outlet 170 for circulating a coolant into the outer frame 140.

First, the battery cell 110 may be a pouch-type battery cell. Such a pouch-type battery cell may be formed by housing an electrode assembly in a pouch case made of a laminate sheet including a resin layer and a metal layer, and then heat-sealing the sealing part of the pouch case. In this case, the battery cell 110 may be formed in a rectangular sheet structure.

Such battery cells 110 may be formed in a plurality of numbers, and the plurality of battery cells 110 may be stacked so as to be electrically connected to each other, thereby forming a battery cell stack 120. In particular, as shown in FIG. 4, a plurality of battery cells 110 may be stacked along a direction parallel to the y-axis direction. As described above, the direction in which the plurality of battery cells 110 are stacked may be defined as a width direction of the battery cell stack 120.

The fixed frame 130 may be positioned while covering at least one surface of the battery cell stack 120. The fixed frame 130 may be positioned while covering the lower part of the battery cell stack 120, and specifically, the fixed frame 130 may be positioned while covering the lower surface and partial side surface of the battery cell stack 120.

The outer frame 140 may be intended to protect the battery cell stack 120 and electrical components connected thereto from external physical impact. The outer frame 140 may house the battery cell stack 120 and electrical components connected thereto in the internal space of the outer frame 140.

The structure of the outer frame 140 may have various shapes. According to certain embodiments of the present disclosure, the structure of the outer frame 140 may be a mono-frame structure. Here, the mono-frame may be in the form of metal plate in which the upper surface, lower surface and both side surface are integrated together. The mono-frame may be manufactured by extrusion molding.

However, the structure of the outer frame 140 is not limited thereto, and in another embodiment, the outer frame 140 may have a structure in which a U-shaped frame and an upper plate are coupled. In this case, the U-shaped frame may be formed in such a way that the lower surface and both side surfaces of the outer frame 140 are coupled or integrated. At this time, each frame or plate constituting the U-shaped frame may be manufactured by press molding. Furthermore, the structure of the outer frame 140 may be provided as an L-shaped frame in addition to a mono-frame or a U-shaped frame, and may be provided in various structures not described in the above-described embodiments.

The outer frame 140 may be provided in a form in which the front and rear surfaces are opened along a longitudinal direction (x-axis direction). Here, the longitudinal direction may be a direction in which the electrode lead 111 protrudes from the battery cell 110, as will be described later. In this case, the front surface and rear surface of the battery cell stack 120 may not be covered by the outer frame 140. The front surface and rear surface of the battery cell stack 120 may be covered by busbar frame assemblies 180 and 190, or the like, through which the front surface and rear surface of the battery cell stack 120 may be protected from external physical impact or the like.

In particular, referring to FIGS. 10 and 11, in the battery assembly 100 according to the present embodiments, the coolant may be flowed into the outer frame 140 through the inlet 160 and then discharged to the outside of the battery assembly 100 through the outlet 170. At this time, the coolant may be a fluid. However, since the coolant comes into direct contact with the battery cell stack 120, other electrical components, and busbar frame assemblies 180 and 190 within the battery assembly 100, it needs to be electrically insulated. Therefore, the coolant may be a material having insulating properties. In one embodiment, the coolant may be an insulating oil.

In a first direction d1 and a second direction d2 which are opposite to each other while being parallel to the direction in which the battery cells 110 are stacked, the inlet 160 may be positioned so as to be biased in the first direction d1 from the center of the battery cell stack 120 in the direction in which the battery cells 110 are stacked. The outlet 170 may be positioned so as to be biased in the second direction d2 from the center of the battery cell stack 120 in the direction in which the battery cells 110 are stacked. That is, the inlet 161 and the outlet 170 are preferably positioned on opposite sides to each other on the basis of the direction in which the battery cells 110 are stacked. The inlet 160 and the outlet 170 should be disposed in this manner, so that the coolant can evenly cool all the battery cells 110 while flowing throughout the entire space inside the outer frame 140. If the inlet 160 and the outlet 170 are positioned together at the center of the battery cell stack 120 in the direction in which the battery cells 110 are stacked, the coolant will flow only to the central portion, which is the portion with minimum flow resistance, so that the coolant does not flow well to the battery cells 110 positioned on the outer part of the battery cell stack 120. Ultimately, this causes a cooling imbalance inside the battery assembly 100. In addition, if the inlet 160 and the outlet 170 are positioned so as to be biased only on one side of the first direction d1 or the second direction d2, the coolant will flow only to some outside portion of the battery cells 110 adjacent to each other in the biased direction, which will also cause a cooling imbalance inside the battery assembly 100. Therefore, in order to induce the coolant to flow evenly to all of the battery cells 110 inside the battery assembly 100, the inlet 160 and the outlet 170 are preferably positioned on opposite sides to each other on the basis of the direction in which the battery cells 110 are stacked, as mentioned above.

The end plate 300 may be positioned on the opened first side (x-axis direction) and second side (-x-axis direction) of the outer frame 140. The end plate 300 positioned on the opened first side of the outer frame 140 may be a first end plate 310, and the end plate 300 positioned on the opened second side of the outer frame 140 may be a second end plate 320. The end plate 300 may physically protect the battery cell stack 120 and other electrical components from external impact.

The inlet 160 may be a hole including a protrusion (not shown) protruding in a direction opposite to the region where the outer frame 140 is disposed. The protrusion may be positioned while passing through the inlet opening (not shown) formed in the first end plate 310.

The outlet 170 may be a hole including a protrusion (not shown) protruding in a direction opposite to the region where the outer frame 140 is disposed. The protrusion may be positioned while passing though the outlet opening (not shown) formed in the second end plate 320.

The battery cell stack 120 according to certain embodiments of the present disclosure includes a first battery cell stack 120a and a second battery cell stack 120b disposed along a longitudinal direction in which the electrode lead 111 protrudes from the battery cell 110. The first battery cell stack 120a and the second battery cell stack 120b are fixed to the fixed frame 130.

Specifically, the battery assembly 100 of the present embodiments may be one in which one end and the other end of each battery cell stack 120 constituting the two conventional battery assemblies 100 are electrically connected. In other words, the first battery cell stack 120a and the second battery cell stack 120b may be electrically coupled.

The fixed frame 130 may be formed of a material having rigidity and thus can serve to protect the battery cell stack 120 from external physical impact and to firmly fix and support them within the outer frame 140.

Referring again to FIGS. 7 and 8, the fixed frame 130 according to certain embodiments of the present disclosure may include side surface parts 131 covering both side surfaces of the battery cell stack 120 and a lower surface part 132 covering the lower surface of the battery cell stack 120. This may correspond to one exemplary structure of the fixed frame 130. Both side surface parts 131 of the fixed frame 130 may come into surface contact with each of the battery cells 110 positioned on the outermost side in the battery cell stack 120.

In other words, the fixing force of the battery cell stack 120 can be enhanced by eliminating the gap between the battery cell stack 120 and the fixed frame 130. Thereby, the battery cells 110 can be protected from external physical impact, and the vibration and impact performance of the battery assembly 100 can be improved.

Referring again to FIGS. 4 to 8, 10 and 11, the battery assembly 100 according to certain embodiments of the present disclosure may further include a first busbar frame assembly 180 provided on one side of the first battery cell stack 120a; and a second busbar frame assembly 190 provided on one side of the second battery cell stack 120b.

The busbar frame assemblies 180 and 190 may be formed so that they are positioned on the opened first side (x-axis direction) and second side (-x-axis direction) of the outer frame 140 to cover the battery cell stack 120. The busbar frame assemblies 180 and 190 may electrically connect the battery cells 110 constituting the battery cell stack 120 in series or in parallel.

The battery assembly 100 according to the present embodiments may be formed by electrically connecting the first battery cell stack 120a and the second battery cell stack 120b to each other along a longitudinal direction (x-axis direction) of the battery cell 110. Specifically, a first busbar frame assembly 180 positioned at the other end of the first battery cell stack 120a and a second busbar frame assembly 190 positioned at one end of the second battery cell stack 120b may be electrically connected to form a battery assembly 100 according to the present embodiments.

The busbar frame assemblies 180 and 190 may include an electrically insulating material.

Meanwhile, a flexible printed circuit board 330 may be provided to electrically connect the first busbar frame assembly 180 and the second busbar frame assembly 190. The flexible printed circuit board 330 is mounted so as to extend in the longitudinal direction of the battery cells 110 and configured to sense the battery cells 110. That is, as shown in FIG. 5, the flexible printed circuit board 330 senses voltage data or thermal data of the battery cells 110 while being positioned on the upper surface of the battery cell stack 120. In particular, the flexible printed circuit board 330 can be electrically connected while being bent toward the busbar frame assemblies 180 and 190 at one end. Thus, the voltage data of each battery cell 110 can be sensed and transmitted to the outside.

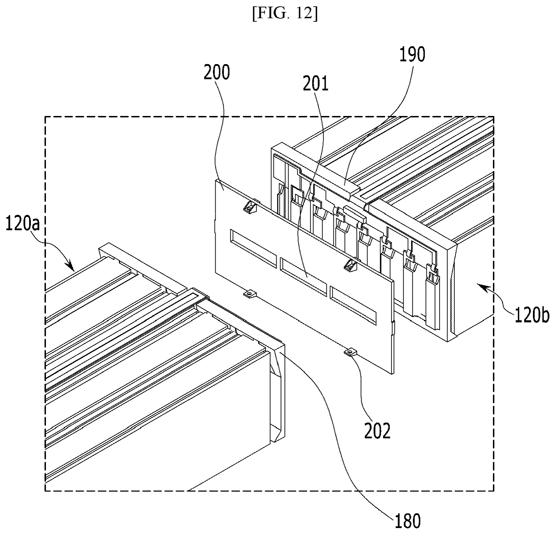

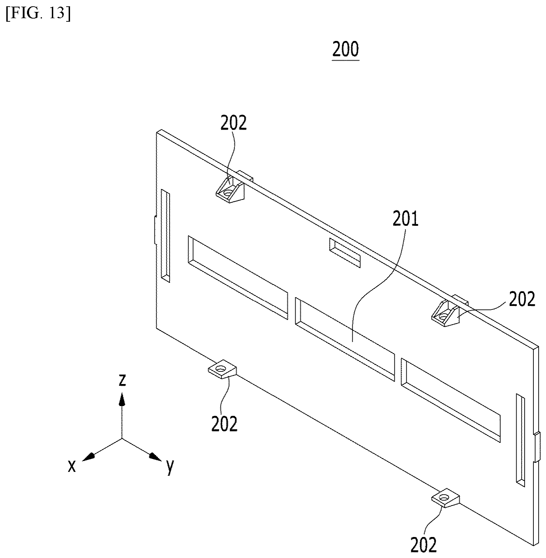

FIG. 12 is an exploded perspective view showing an insulating plate 200 between battery cell stacks 120. FIG. 13 is a perspective view showing an insulating plate 200 according to certain embodiments of the present disclosure.

Referring to FIGS. 12 and 13, the battery assembly 100 according to certain embodiments of the present disclosure may further include an insulating plate 200 that is fastened to at least one of the first busbar frame assembly 180 and the second busbar frame assembly 190, between the first busbar frame assembly 180 and the second busbar frame assembly 190.

The insulating plate 200 may include a material having electrical insulation properties. In one embodiment, the insulating plate 200 may be a plastic injection molded product.

Both the first battery cell stack 120a and the second battery cell stack 120b may be included within one outer frame 140. Therefore, there is a risk of causing short circuit due to contact between the first battery cell stack 120a and the second battery cell stack 120b, or contact between the first busbar frame assembly 180 positioned on the other side of the first battery cell stack 120a and the second busbar frame assembly 190 positioned on one side of the second battery cell stack 120b.

Thus, in the present embodiments, an insulating plate 700 having electrical insulation properties is disposed between the first battery cell stack 120a and the second battery cell stack 120b. The insulating plate 700 is used to secure electrical insulation properties and creepage distance between the first battery cell stack 120a and the second battery cell stack 120b, or between the first busbar frame assembly 180 and the second busbar frame assembly 190.

Referring again to FIGS. 11 to 13, the insulating plate 200 according to certain embodiments of the present disclosure may include a flow path hole 201 through which a coolant may move. The coolant can move between the first battery cell stack 120a and the second battery cell stack 120b through the flow path hole 201.

A flow path hole 201 through which the coolant passes is formed in the center of the insulating plate 200, so that the flow stagnation of the coolant may not occur in a space between the first battery cell stack 120a and the second battery cell stack 120b. Thereby, it is possible to secure the flowability of the coolant and thus increase the cooling performance.

Specifically, the battery assembly 100 according to the present embodiments has a shape that extends along the longitudinal direction, including the first battery cell stack 120a and the second battery cell stack 120b. When the coolant circulates within the outer frame 140, a section where the flow of the coolant stagnates may occur between the first battery cell stack 120a and the second battery cell stack 120b. The insulating plate 200 is designed so that a flow path hole 201 through which the coolant passes is formed in the center of the insulating plate 200, thereby preventing the flow stagnation of the coolant from occurring in the space between the first battery cell stack 120a and the second battery cell stack 120b. That is, the flowability of the coolant is secured to enhance the cooling performance.

As described above, the insulating plate 200 may be formed with a flow path hole 201 through which the coolant passes. In one embodiment, the flow path hole 201 may be formed in the center of the insulating plate 200. More specifically, the flow path hole 201 may be opened in a rectangular shape whose upper and lower sides are longer than both side sides. That is, the flow path hole 201 may be opened so as to extend long along the direction in which the battery cells 110 are stacked.

The flow path hole 201 according to the present embodiments may be opened to have an area of 5% or more and 60% or less relative to the area of one surface of the insulating plate 200. Here, the area of one surface of the insulating plate 200 may be an area including the opening area of the flow path hole 201. That is, assuming that the flow path hole 201 is blocked, the area of one surface of the insulating plate 200 may be a standard of the ratio.

If the area of the flow path hole 201 is less than 5% of the area of one surface of the insulating plate 200, the area through which the coolant passes is too narrow, which may obstruct the flow of the coolant. In addition, if the area of the flow path hole 201 is more than 60% of the area of one surface of the insulating plate 200, the area of the flow path hole 201 is too large, so that the flow stagnation of the coolant in the space between the first battery cell stack 120a and the second battery cell stack 120b cannot be eliminated, and there is a risk of causing a short circuit between the first battery cell stack 120a and the second battery cell stack 120b.

Meanwhile, the insulating plate 200 and the busbar frame assemblies 180 and 190 according to the present embodiments may be bolt-joined.

Referring again to FIG. 12, the insulating plate 200 according to the present embodiments may be fixed to at least one of the first busbar frame assembly 180 or the second busbar frame assembly 190. That is, the insulating plate 200 according to certain embodiments of the present disclosure may be fixed to either the first busbar frame assembly 180 or the second busbar frame assembly 190. Furthermore, the insulating plate 200 according to certain other embodiments of the present disclosure may be fixed to both the first busbar frame assembly 180 and the second busbar frame assembly 190.

For example, the insulating plate 200 according to the present embodiments may include a mounting part 202 fixed to the first busbar frame assembly 180 or the second busbar frame assembly 190. The mounting part 202 may protrude from the insulating plate 200 toward the first busbar frame assembly 180 or the second busbar frame assembly 190, and a fastening hole may be formed in the mounting part 202.

In one embodiment, some of the mounting parts 202 may protrude toward the first busbar frame assembly 180, and the rest of the mounting parts 202 may protrude toward the second busbar frame assembly 190. A bolt (not shown) may pass through the fastening hole of the mounting part 202 protruding toward the first busbar frame assembly 180 and then be fastened to the first busbar frame assembly 180. In addition, another bolt may pass through the fastening hole of the mounting part 202 protruding toward the second busbar frame assembly 190 and then be fastened to the second busbar frame assembly 190. In particular, the mounting part 202 may be formed adjacent to the upper side or lower side of the insulating plate 200. Thereby, the bolts passing through the mounting part 202 may also be fastened to an adjacent region of the upper side or lower side of the first busbar frame assembly 180 or the second busbar frame assembly 190.

In the above manner, the insulating plate 200 may be fixed to at least one of the first busbar frame assembly 180 or the second busbar frame assembly 190. Through this fixation, it is possible to enhance the fixing force between the first battery cell stack 120a and the second battery cell stack 120b, and improve the vibration and shock performance of the battery assembly 100. However, this is an illustrative example in which the insulating plate 200 is fixed to at least one of the first busbar frame assembly 180 or the second busbar frame assembly 190, and may be fixed in other manners.

Referring again to FIGS. 10 and 11, the inlet 160 and the outlet 170 may be positioned on opposite sides to each other on the basis of the insulating plate 200. The first battery cell stack 120a may be positioned between the inlet 160 and the insulating plate 200, and the second battery cell stack 120b may be positioned between the outlet 170 and the insulating plate 200.

The inlet 160 and the outlet 170 must be arranged in this manner, so that the coolant can maintain a one-way flow within the battery assembly 100. The coolant flowing in through the inlet 160 can pass through the first battery cell stack 120a, the flow path hole 201 of the insulating plate 200, and the second battery cell stack 120b in sequence, and be discharged through the outlet 170. That is, the coolant can evenly cool all the battery cells 110 while flowing through the entire space inside the outer frame 140.

The coolant flowing in through the inlet 160 can pass through the first battery cell stack 120a, the flow path hole 201 of the insulating plate 200, and the second battery cell stack 120b in sequence, and be discharged through the outlet 170.

As described above, the coolant can come into direct contact with the battery cell stack 120 and other electrical components, and busbar frame assemblies 180 and 190 that generate heat within the battery assembly 100, thereby directly cooling them while receiving transfer of heat. Therefore, it is possible to improve the cooling efficiency and thus extend the battery life as compared to the conventional method of indirectly cooling the battery assembly 100 using a heat sink or the like.

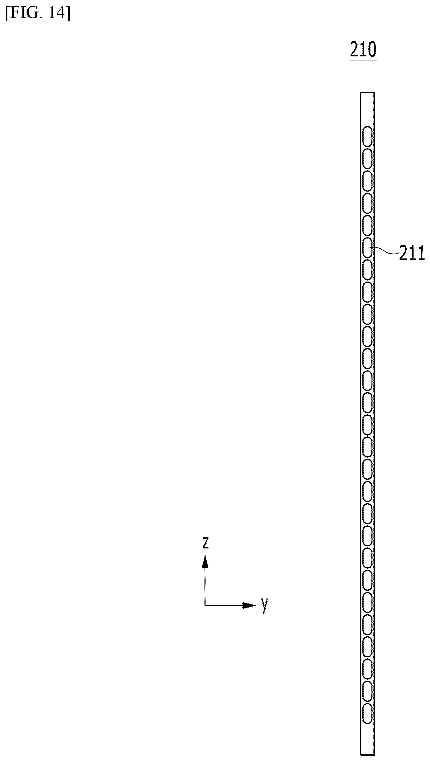

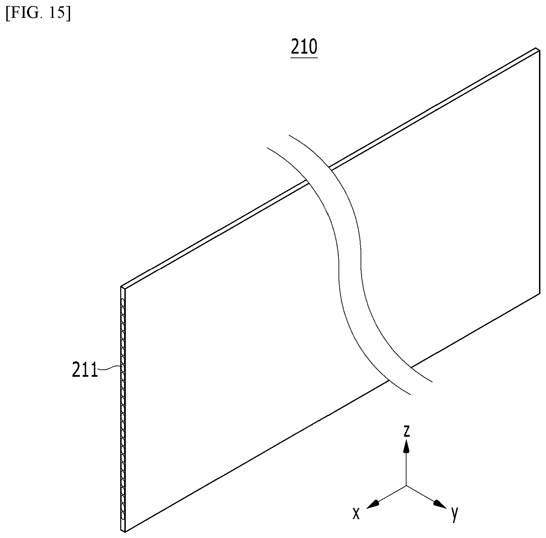

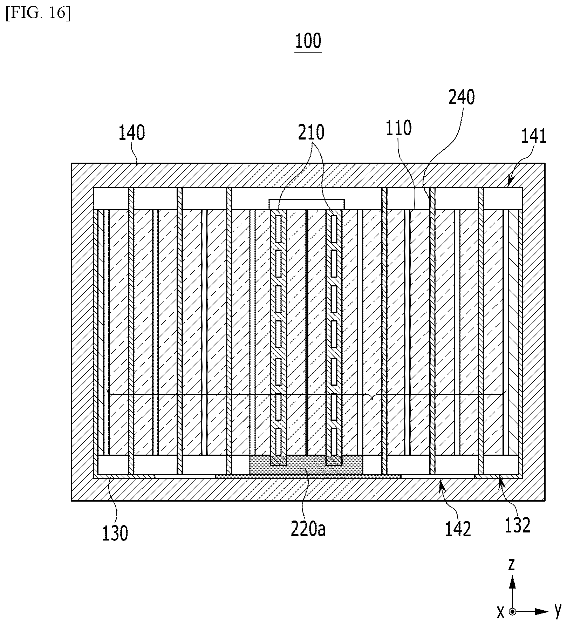

FIG. 14 is a plan view of a cooling spacer 210 according to certain embodiments of the present disclosure. FIG. 15 is a perspective view of a cooling spacer 210 according to certain embodiments of the present disclosure. FIG. 16 is a cross-sectional view showing a cross section taken along the cutting line B-B' of FIG. 3.

Referring to FIGS. 14 to 16, a battery assembly 100 according to certain embodiments of the present disclosure may further include a cooling spacer 210 positioned in at least one place between a plurality of battery cells 110.

The cooling spacer 210 may be a surface that comes into contact with one side surface of the battery cells 110 positioned in the central part of the battery cell stack 120. Specifically, one surface of the cooling spacer 210 may come into contact with one surface of the battery cell 110 that faces one surface of the cooling spacer 210. The other surface of the cooling spacer 210 may come into contact with one side surface of the battery cell 110 that faces the other surface of the cooling spacer 210. In this case, although not shown in the present drawing, an adhesive is interposed between one surface of the battery cell 110 and one surface of the cooling spacer 210, and between the other surface of the adjacent battery cell 110 and the cooling spacer 210, so that the battery cell 110 and the cooling spacer 210 can be adhesively fixed. For example, the adhesive member 220 may be an insulating tape.

The size of the cooling spacer 210 may be larger than the size of the battery cell 110. That is, the height (z-axis direction) of the cooling spacer 210 may be larger than the height of the battery cell 110. In this case, the battery cell 110 may be attached to the cooling spacer 210 and positioned as if it floats inside the outer frame 140 without coming into contact with the outer frame 140. Specifically, the upper edge and the lower edge of the battery cell 110 may be positioned while having a certain height from one end and the other end of the cooling spacer 210. More specifically, when the height (z-axis direction) of the cooling spacer 210 is higher than the height (z-axis direction) of the battery cell 110, the battery cell 110 may be adhesively fixed while being positioned at the central part of the cooling spacer 210.

The cooling spacer 210 includes a plurality of cooling holes 211 that are perforated along the longitudinal direction, and the coolant can move through the plurality of cooling holes 211.

In this case, the coolant moves while receiving the transfer of heat generated from the battery cell 110, so that the battery cell 110 placed in the central part of the battery cell stack 120 can be effectively cooled.

Referring again to FIGS. 7 and 8, a first adhesive member 220a may be positioned between the lower surface of the battery cell stack 120 and the lower surface part 132 of the fixed frame 130. The first adhesive member 220a may be adhered to each of the lower surface of the battery cell stack 120 and the lower surface part 132 of the fixed frame 130. A second adhesive member 220b may be positioned in at least one place between the side surface of the battery cell stack 120 and the side surface part 131 of the fixed frame 130. The second adhesive member 220b may be adhered to each of the side surface of the battery cell stack 120 and the side surface part 131 of the fixed frame 130.

When stacking a plurality of battery cells 110 to form a medium- or large-sized battery assembly 100, it tends to slide easily due to external impact. Therefore, in order to prevent this problem and maintain a stable stacked structure of battery cells 110, an adhesive member 220, for example, a tacky adhesive such as a double-sided tape or a chemical adhesive that bonds through chemical reactions during adhesion, can be attached to the lower surface part 132 and the side surface part 131 of the fixed frame 130, thereby maintaining the stacked structure of the first battery cell stack 120a and the second battery cell stack 120b.

The adhesive members 220 may be formed of a resin. For example, the adhesive members 220 may be formed of a resin or the like. When the adhesive members 220 come into contact with other components, they can be coupled with other components while being subsequently cured, thereby fixing and supporting them.

Therefore, the adhesive force between the first battery cell stack 120a and the second battery cell stack 120b, and the fixed frame 130 can be made stronger. In this case, even when an impact is applied to the battery assembly 100 from the outside, the first battery cell stack 120a and the second battery cell stack 120b do not separate or detach from the fixed frame 130, thereby improving the safety and mechanical reliability of the battery.

Referring again to FIG. 16, the battery assembly 100 according to certain embodiments of the present disclosure may further include a cooling fin 240 positioned in at least one place between the battery cells 110.

The cooling fin 240 may be positioned between a plurality of battery cells 110. For example, the cooling fin 240 may be positioned at every two battery cells 110. Specifically, one cooling fin 240 and another cooling fin 240 adjacent thereto may be positioned with two battery cells 110 between them. However, this is only an illustrative example, and the number of battery cells 110 between the cooling fins 240 is not particularly limited.

However, the shape of the cooling fin 240 is not limited to the present drawing, and any shape may be used as long as it can fix the battery cell 110 while making contact with the battery cell 110. For example, the cooling fin 240 may be L-shaped.

The cooling fin 240 may be a metal. Specifically, the cooling fin 240 may be a metal having high thermal conductivity. Therefore, the cooling fin 240 can directly receive transfer of the heat generated from the battery cell 110 during charging and discharging. When heat is generated, the battery cell 110 can be primarily cooled while heat is transferred to the cooling pin 240 that is in contact with the side surface of the battery cell 110, and can be secondarily cooled while a coolant is in direct contact with the upper part and lower part of the battery cell 110. Thus, conventionally, even with respect to the upper edge and lower edge regions of the battery cells which were relatively hard cool, direct cooling is possible and thus, the cooling efficiency can be enhanced.

Furthermore, the cooling fin 240 can be fixed between the lower surface part 132 of the fixed frame 130 and the ceiling part 141 of the outer frame 140. Specifically, the upper end of the cooling fin 240 can come into contact with the ceiling part 141 of the outer frame 140, and the lower end of the cooling fin 240 can come into contact with the lower surface part 132 of the fixed frame 130. In this way, the cooling fin 240 can be fixed while being positioned in close contact with the ceiling part 141 of the outer frame 140 and the lower surface part 132 of the fixed frame 130. Consequently, the cooling fin 240 can be more firmly fixed and positioned within the outer frame 140.

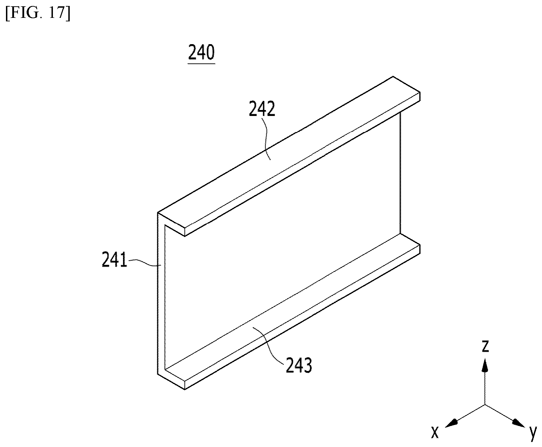

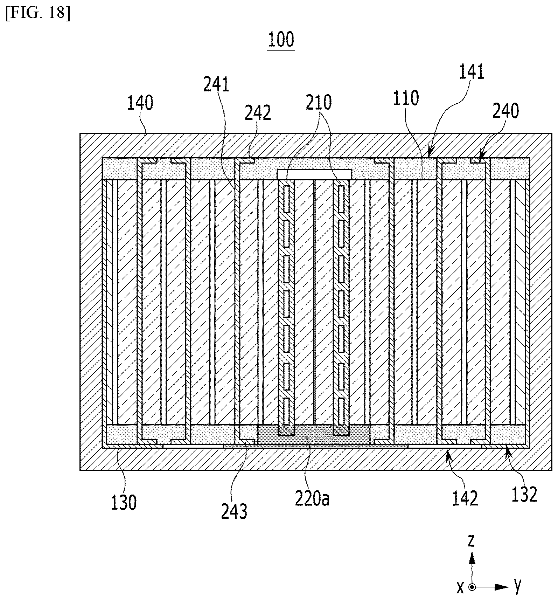

FIG. 17 is a perspective view showing a cooling fin according to certain embodiments of the present disclosure. FIG. 18 is a cross-sectional view of a battery assembly 100 according to certain other embodiments of the present disclosure.

Referring to FIGS. 17 and 18, a cooling fin 240 according to certain embodiments of the present disclosure may include a main part 241 positioned between battery cells 110; a first support part 242 extending perpendicular to one surface of the main part 241 at the upper end of the main part 241; and a second support part 243 extending perpendicular to one surface of the main part 241 at the lower end of the main part 241

Specifically, the cooling fin 240 may include a main part 241 configured to have a surface corresponding to or larger than one side surface of the first battery cell 110, and a first support part 242 and a second support part 243 configured to protrude from the upper end of the main part 241 so as to be parallel to the stacking direction (y-axis direction) of the battery cell stack 120.

One surface of the first support part 242 may be positioned facing the battery cell 110. That is, one surface of the first support part 242 may be positioned facing the upper part of the battery cell 110, and the upper part and lower part of the battery cell 110 may be positioned by being adhesively fixed to the main part 241 while having a certain height from the ceiling part 141 and the bottom part 142 of the outer frame 140. In other words, a certain space may be provided between the ceiling part 141 of the outer frame 140 and the upper part of the battery cell 110, and between the bottom part 142 of the outer frame 140 and the lower part of the battery cell 110, and the coolant may move into the space. In this case, the distance between the ceiling part 141 of the outer frame 140 and the upper part of the battery cell 110 may correspond to the distance between the bottom part 142 of the outer frame 140 and the lower part of the battery cell 110.

Furthermore, the battery cell 110 is disposed in the space between the first support part 242 and the second support part 243, thereby making it possible to more firmly fix the battery cell 110. In particular, the movement of the battery cell 110 in the z-axis direction of FIG. 18 can be prevented by the first support part 242 and the second support part 243. That is, the durability of the battery assembly 100 can be enhanced by preventing damage to the battery cell 110 and leakage of electrolyte that may occur due to the movement of the battery cell 110.

Referring again to FIG. 18, the first support part 242 can come into contact with the ceiling part 141 of the outer frame 140, and the second support part 243 can come into contact with the lower surface 132 of the fixed frame 130. In this way, the cooling fin 240 can be fixed while being positioned in close contact with the ceiling part 141 of the outer frame 140 and the lower part 132 of the fixed frame 130. Thereby, the cooling fin 240 can be more firmly fixed and positioned within the outer frame 140.

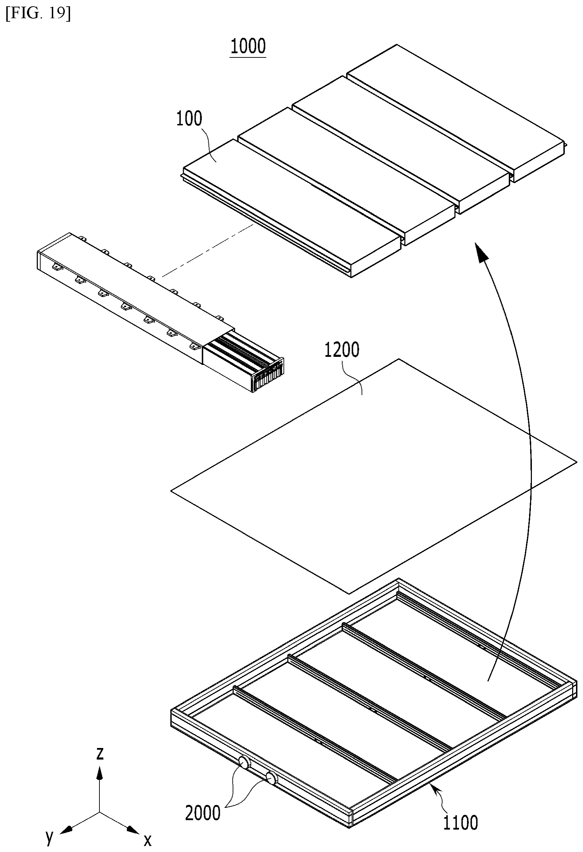

FIG. 19 is an exploded perspective view of a battery pack 1000 according to certain embodiments of the present disclosure.

Referring to FIG. 19, according to certain other embodiments of the present disclosure, a battery pack 1000 comprising the battery assembly 100 is provided.

The battery pack 1000 according to certain embodiments of the present disclosure may include a lower pack frame 1100 on which a plurality of battery assemblies 100 are mounted, an upper pack frame 1200 positioned at the upper part of the battery assembly 100, and at least one venting part 2000 provided on a side surface of the lower pack frame 1100. Here, the lower pack frame 1100 and the upper pack frame 1200 may be coupled to each other by a method such as welding to seal the inside of the battery pack 1000. High-temperature venting gas discharged from the battery assemblies 100 in the space between the lower pack frame 1100 and the upper pack frame 1200 may be discharged to the outside through the venting part 2000.

One or more battery assemblies 100 according to certain embodiments of the present disclosure described above may be mounted together with various control and protection systems such as a battery management system (BMS), a battery disconnect unit (BDU), and a cooling system, to form a battery pack 1000.

The battery assemblies 100 or the battery pack 1000 may be applied to various devices, which include, for example, transportation vehicles such as electric bicycles, electric vehicles, and hybrids. However, without being limited thereto, they may be applied to various devices using secondary batteries.

In the embodiments above, expressions indicating directions such as "front," "rear," "left," "right," "up," and "down" have been used. These expressions are used only to facilitate the description, and may vary, for example, depending on the location of a target object or an observer.

Although the present disclosure has been illustrated and described above with reference to preferred embodiments thereof, the technical scope of the present disclosure is not limited to the embodiments, and also includes various modifications and variations made by one of ordinary skill in the art using the concepts defined in the claims attached therewith.

### [Description of Reference Numerals]

100: battery assembly
110: battery cell
120: battery cell stack
130: fixed frame
140: outer frame
200: insulating plate
210: cooling spacer
240: cooling fin

## Claims

1. A battery assembly comprising:
a battery cell stack in which a plurality of battery cells are stacked;
a fixed frame that covers at least a part of the battery cell stack;
an outer frame in which the battery cell stack and the fixed frame are housed; and
an inlet and an outlet that circulates a coolant into the outer frame.

2. The battery assembly of claim 1,
wherein the battery cell stack comprises a first battery cell stack and a second battery cell stack, and
the first battery cell stack and the second battery cell stack are fixed to the fixed frame.

3. The battery assembly of claim 1,
wherein the fixed frame comprises side surface parts that cover both side surfaces of the battery cell stack, and
the both side surface parts of the fixed frame come into surface contact with each of the battery cells positioned on the outermost sides of the battery cell stack.

4. The battery assembly of claim 1,
wherein the battery cell stack comprises a first battery cell stack and a second battery cell stack, and
the battery assembly comprises a first busbar frame assembly provided on one side of the first battery cell stack; and a second busbar frame assembly provided on one side of the second battery cell stack.

5. The battery assembly of claim 4,
further comprising an insulating plate that is fastened to at least one of the first busbar frame assembly or the second busbar frame assembly, between the first busbar frame assembly and the second busbar frame assembly.

6. The battery assembly of claim 5,
wherein the insulating plate comprises a flow path hole through which the coolant is able to move, and
the coolant moves between the first battery cell stack and the second battery cell stack through the flow path hole.

7. The battery assembly of claim 5,
wherein the insulating plate and the busbar frame assemblies are bolt-coupled.

8. The battery assembly of claim 5,
wherein the inlet and the outlet are positioned on opposite sides to each other on the basis of the insulating plate.

9. The battery assembly of claim 8,
wherein the first battery cell stack is positioned between the inlet and the insulating plate, and
the second battery cell stack is positioned between the outlet and the insulating plate.

10. The battery assembly of claim 9,
wherein the coolant flowing in through the inlet passes through the first battery cell stack, the flow path hole included in the insulating plate, and the second battery cell stack in sequence, and is discharged through the outlet.

11. The battery assembly of claim 1,
further comprising a cooling spacer positioned at least one place between the plurality of battery cells,
wherein the cooling spacer comprises a plurality of cooling holes formed along a longitudinal direction, and
the coolant is able to move though the plurality of cooling holes.

12. The battery assembly of claim 1,
wherein the fixed frame comprises a lower surface part that covers a lower surface of the battery cell stack,
a first adhesive member is positioned between the lower surface part of the battery cell stack and the lower surface of the fixed frame, and
the first adhesive member is adhered to the lower surface part of the battery cell stack and the lower surface of the fixed frame, respectively.

13. The battery assembly of claim 1,
wherein the fixed frame comprises side surface parts that cover both side surfaces of the battery cell stack,
a second adhesive member is positioned at least one place between the side surface of the battery cell stack and the side surface part of the fixed frame, and
the second adhesive member is adhered to the side surface of the battery cell stack and the side surface part of the fixed frame, respectively.

14. The battery assembly of claim 1,
further comprising a cooling fin positioned at least one place between the battery cells,
wherein the fixed frame comprises a lower surface part that covers the lower surface of the battery cell stack, and
the cooling fin is fixed between the lower surface part of the fixed frame and a ceiling part of the outer frame.

15. The battery assembly of claim 14,
wherein the cooling fin comprises:
a main part positioned between the battery cells;
a first support part that extends perpendicular to one surface of the main part at the upper end of the main part; and
a second support part that extends perpendicular to one surface of the main part at the lower end of the main part.

16. The battery assembly of claim 15,
wherein the first support part comes into contact with the ceiling part of the outer frame, and
the second support part comes into contact with the lower surface part of the fixed frame.

17. A battery pack comprising the battery assembly of claim 1.
